# EUROPÄISCHE PATENTANMELDUNG

(11) **EP 4 691 641 A1**
(43) Veröffentlichungstag der Anmeldung: **11.02.2026**
(21) Anmeldenummer: 24192878.7
(22) Anmeldetag: 05.08.2024
(51) Int. Cl.: B01L 3/00

(54) **ZENTRIFUGIERBARER PROBENTRÄGER**

(71) Anmelder: Testo bioAnalytics GmbH, 79822 Titisee-Neustadt (DE)
(72) Erfinder: Münzer, Markus, 78176 Blumberg (DE); Neidhart, Marco, 79853 Lenzkirch (DE)
(74) Vertreter: Mertzlufft-Paufler, Cornelius

(57) **Zusammenfassung**

Zentrifugierbarer Probenträger (1) mit einem
Flüssigkeitsreservoir (2), das mit einer Siegelfolie (7) verschlossen ist, wobei der Probenträger (1) wenigstens einen deformierbaren Bereich (8) aufweist, wobei das Flüssigkeitsreservoir (2) durch eine Deformation des deformierbaren Bereichs (8) öffenbar ist, dadurch gekennzeichnet,
dass der deformierbare Bereich (8) wenigstens ein Aktivierungselement (10) aufweist, welches bei einer Deformation des deformierbaren Bereichs (8) die Siegelfolie (7) durchsticht. (Fig. 1)

## Beschreibung

Die Erfindung betrifft einen zentrifugierbaren Probenträger mit einem Flüssigkeitsreservoir, das mit einer Siegelfolie verschlossen ist.

Zentrifugierbare Probenträger mit einem Fluidiksystem sind aus dem Stand der Technik bekannt und werden häufig als "Lab-on-a-chip"-System bezeichnet, da sie zur Identifizierung und Analyse von Mikropartikeln auf minimalstem Raum verwendet werden. Derartige "Lab-on-a-chip"-Systeme finden beispielsweise in der Lebensmittelindustrie, der Medizin und der pharmazeutischen Produktion Anwendung.

Zentrifugierbare Probenträger mit einem Fluidiksystem besitzen oftmals auch ein Flüssigkeitsreservoir, in dem beispielsweise ein Reagens vorgehalten ist, das für eine Analyse benötigt wird. Dieses Flüssigkeitsreservoir ist zunächst dicht verschlossen und wird erst während der Analyse geöffnet, wodurch das Flüssigkeitsreservoir mit dem Fluidiksystem verbunden wird.

Beim Öffnen des Flüssigkeitsreservoirs kann es jedoch zu einer unkontrollierten Entleerung des Flüssigkeitsreservoirs und dadurch eventuell zu einem Austreten der Flüssigkeit aus dem Probenträger kommen. Dies ist in jedem Fall unerwünscht.

Es ist daher Aufgabe der Erfindung, einen zentrifugierbaren Probenträger mit einem Flüssigkeitsreservoir zu verbessern.

Die Aufgabe wird durch einen Probenträger mit den Merkmalen des Anspruch 1 gelöst.

Der erfindungsgemäße Probenträger ist demnach dadurch gekennzeichnet, dass der Probenträger wenigstens zwei

Aktivierungselemente aufweist,
dass die Aktivierungselemente benachbart zur Siegelfolie angeordnet sind, und dass die Siegelfolie durch eine Bewegung der Aktivierungselemente durchstechbar ist.

Die Siegelfolie ist in der Regel dünn im Verhältnis zu einer Wandung des Probenträgers. Das Durchstechen der Siegelfolie erfordert daher wenig Kraft. Zudem kann das Aktivierungselement spitz oder zulaufend ausgebildet sein, wodurch das Aktivierungselement noch einfacher die Siegelfolie durchstechen kann.

Dadurch dass das Aktivierungselement Teil des Probenträgers ist, wird eine Kontamination der Flüssigkeit und eine Kontamination des Aktivierungselements verhindert.

Zwischen dem Aktivierungselement und der Siegelfolie kann eine Art Kammer gebildet sein, die ein Austreten der Flüssigkeit aus dem Probenträger verhindern kann.

In einer Ausführung ist das Flüssigkeitsreservoir so angeordnet, dass in Gebrauchsstellung des Probenträgers eine mit der Siegelfolie verschlossene Öffnung nach oben, also entgegen der Schwerkraft ausgerichtet ist.

Auf diese Weise kann in Gebrauchsstellung auch bei einer vollständigen Öffnung der Siegelfolie keine Flüssigkeit aus dem Flüssigkeitsreservoir austreten. Die Entnahme der Flüssigkeit erfolgt dabei allein durch die während einer Zentrifugation auftretende Zentrifugalkraft.

Durch diese Zentrifugalkraft wird die Flüssigkeit im Flüssigkeitsreservoir nach außen zu einer durch das Aktivierungselement gestochenen Öffnung in der Siegelfolie gedrückt.

Ein weiterer Vorteil besteht darin, dass das Flüssigkeitsreservoir jederzeit während eines Analysevorgangs bewusst und unabhängig von einer Zentrifugation geöffnet werden kann. Es kann also beispielsweise vor dem Öffnen des Flüssigkeitsreservoir bereits ein Zentrifugationsschritt sattfinden.

In dieser Anordnung sind in Gebrauchsstellung die Aktivierungselemente oben, also über der Siegelfolie angeordnet und das Aktivierungselement ist nach unten gerichtet.

Ein Aktivierungselement kann dabei durch eine Wandung des Probenträgers gebildet sein. Ein Aktivierungselement kann etwa als Biegezunge oder anderweitig elastisch verformbares Element ausgebildet sein, auch als Teil einer Wandung. Das Aktivierungselement ist bevorzugt einstückig mit dem Probenträger ausgebildet.

In einer Ausführung ist in Gebrauchsstellung des Probenträgers unterhalb der Siegelfolie ein Luftraum gebildet. Das bedeutet, die Flüssigkeit des Flüssigkeitsreservoirs liegt in Gebrauchsstellung nicht auf der Siegelfolie auf. Beim Durchstechen der Siegelfolie treffen die Aktivierungselemente daher immer auf den Luftraum und nicht auf die Flüssigkeit. Auf diese Weise kann ein unkontrolliertes Austreten der Flüssigkeit zusätzlich verhindert werden.

In einer Ausführung ist das Flüssigkeitsreservoir als Blister ausgebildet. Auf diese Weise kann das Flüssigkeitsreservoir einfach hergestellt und befüllt werden, beispielsweise bevor es in einen Probenträger eingesetzt wird. Hierdurch ist es möglich, einen Probenträger mit beispielsweise unterschiedlichen Reagenzien zu bestücken, je nach Bedarf und Anwendung. Das Blister kann also außerhalb des Probenträgers befüllt und mit Siegelfolie verschlossen werden.

Alternativ kann das Flüssigkeitsreservoir auch beispielsweise einstückig mit dem Probenträger ausgebildet sein. Es kann dann etwa mit einem Pipettierautomaten gefüllt und anschließend mit Siegelfolie verschlossen werden. Es sind weitere Ausführungsformen des Flüssigkeitsreservoirs denkbar, die hier nicht alle aufgezählt werden können, weshalb die Anmeldung in keiner Weise auf eine bestimmte Ausführungsform des Flüssigkeitsreservoirs beschränkt sein soll.

In einer Ausführung weist das Flüssigkeitsreservoir eine runde Umfangskontur auf. Auf diese Weise ist es besonders einfach ein eventuell gefülltes Blister an dem Probenträger anzuordnen, da keine Orientierung beachtet werden muss.

In einer Ausführung weist das Flüssigkeitsreservoir eine Kegelstumpf-Form auf, wobei vorzugsweise das mit Siegelfolie verschlossene Ende den größeren Durchmesser besitzt. Das Flüssigkeitsreservoir kann auch eine Kugelform aufweisen, oder zumindest eine Teil-Kugel bilden. Dadurch besitzt das Flüssigkeitsreservoir abgeschrägte Wände, so dass die Flüssigkeit einfacher durch die Zentrifugalkraft zu einer Öffnung in der Siegelfolie gedrückt werden kann. Zudem kann dadurch erreicht werden, dass das Flüssigkeitsreservoir vollständig entleert wird, da sich keine Flüssigkeit in Ecken ansammeln kann. Selbstverständlich sind auch andere Formen für das Flüssigkeitsreservoir denkbar und machbar.

In einer Ausführung weist der Probenträger wenigstens einen Fluidkanal auf, der mit dem Flüssigkeitsreservoir verbindbar ist. Auf diese Weise kann das Flüssigkeitsreservoir mit einem Fluidiksystem des Probenträgers verbunden werden. Insbesondere kann beispielsweise die oben erwähnte Kammer mit dem Fluidiksystem durch eine Öffnung oder einen Kanal verbunden sein.

In einer Ausführung sind die Aktivierungselemente durch einen Stempel druckbeaufschlagbar. Auf diese Weise ist es beispielsweise möglich, das Flüssigkeitsreservoir maschinell zu einem gewünschten Zeitpunkt in Gebrauchsstellung zu öffnen. Der Stempel kann beispielsweise durch einen elektrischen Aktuator angetrieben sein.

In einer Ausführung sind die Aktivierungselemente elastisch ausgebildet und kehren nach einer Druckbeaufschlagung in ihre ursprüngliche Form zurück. Dadurch kann sichergestellt werden, dass eine Öffnung in der Siegelfolie durch das Rausziehen des Aktivierungselements freigegeben und somit tatsächlich geöffnet wird.

Vorzugsweise ist das wenigstens eine Aktivierungselement im Wesentlichen am äußeren Umfang des Flüssigkeitsreservoirs angeordnet, so dass das Flüssigkeitsreservoir an seinem äußeren Umfang durchstechbar ist. Dadurch ist eine Entleerung des Flüssigkeitsreservoirs durch die Zentrifugalkraft erleichtert. Denn während einer Zentrifugation wird die Flüssigkeit durch die Zentrifugalkraft zum äußeren Rand des Flüssigkeitsreservoirs befördert. Hier kann insbesondere eine abgeschrägte oder gekrümmte Wand zusätzlich vorteilhaft sein.

In einer Ausführung sind die wenigstens zwei Aktivierungselemente am Umfang des Flüssigkeitsreservoirs, vorzugsweise regelmäßig, verteilt angeordnet. Auf diese Weise ist eine (regelmäßige) Perforation der Siegelfolie erzielbar. Dadurch wird das Entleeren des Flüssigkeitsreservoirs begünstigt, denn durch die wenigstens zweite Öffnung der Siegelfolie kann Luft in das Flüssigkeitsreservoir entsprechend der entnommenen Flüssigkeitsmenge nachströmen.

In einer Ausführung befindet sich wenigstens ein Aktivierungselement am untersten Punkt der Zentrifugationsrichtung. Die Zentrifugationsrichtung zeigt also in Richtung der Zentrifugationskraft und der unterste Punkt ist der Punkt des Flüssigkeitsreservoirs, der in dieser Zentrifugationsrichtung vom Zentrifugationsmittelpunkt am weitesten entfernt ist.

Die Erfindung umfasst weiter ein Verfahren zum Entleeren eines Flüssigkeitsreservoirs eines zentrifugierbaren Probenträgers, wobei eine Siegelfolie des Flüssigkeitsreservoirs an wenigstens zwei voneinander beabstandeten Stellen geöffnet wird und zum Entleeren der Flüssigkeit eine Zentrifugalkraft (Fg) auf die Flüssigkeit in dem Flüssigkeitsreservoir ausgeübt wird. In einer Ausführung ist der Probenkörper ein erfindungsgemäßer Probenkörper.

In einer Ausführung wird zumindest eine der Öffnungen am untersten Punkt der Zentrifugationsrichtung angebracht. Auf diese Weise ist eine vollständige und saubere Entleerung des Flüssigkeitsreservoirs innerhalb des Probenkörpers möglich. Denn durch die Zentrifugalkraft wird die Flüssigkeit an diesen untersten Punkt befördert, wo sie durch die Öffnung aus dem Flüssigkeitsreservoir austreten und in ein Fluidiksystem eines Probenträgers strömen kann.

In einer Ausführung werden die Öffnungen jeweils durch ein an dem Probenkörper angeordnetes Aktivierungselement vorgenommen. Auf diese Weise kann eine Kontamination der Flüssigkeit vermieden werden und eine saubere und vollständige Entleerung sichergestellt werden.

Die Erfindung ist nachfolgen anhand eines bevorzugten Ausführungsbeispiels mit Bezug auf die beiliegenden Zeichnungen näher erläutert.

Es zeigt:
- Fig. 1: eine schematische Schnittdarstellung eines Ausschnitts eines zentrifugierbaren Probenkörpers,
- Fig. 2: den Probenkörper der Fig. 1 in Gebrauchsstellung in einer Zentrifuge mit einem Stempel zur Aktivierung des Probenkörpers,
- Fig. 3: den Probenkörper der Fig. 1 mit abgesenktem Stempel,
- Fig. 4: den Probenkörper der Fig. 1 mit perforierter Siegelfolie nach dem Anheben des Stempels,
- Fig. 5: den Probenkörper der Fig. 1 während einer Zentrifugation,
- Fig. 6: eine schematische Schnittdarstellung eines Ausschnitts eines weiteren zentrifugierbaren Probenkörpers, und
- Fig. 7: den Probenkörper der Fig. 6 mit perforierter Siegelfolie nach dem Anheben der Stempel.

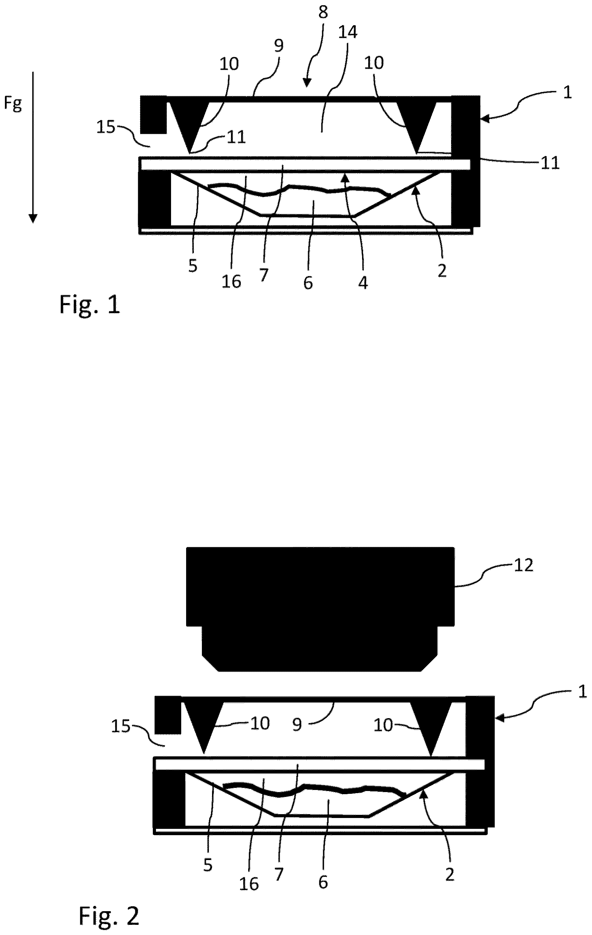

Die Fig. 1 zeigt schematisch eine Schnittdarstellung eines Ausschnitt eines zentrifugierbaren Probenträgers 1. Der Probenträger 1 weist ein nicht näher gezeigtes Fluidiksystem auf, das beispielsweise für ein Lab-on-a-chip ausgebildet ist. Darüber hinaus weist der Probenträger 1 eine Aufnahme für eine Zentrifuge auf, wodurch der Probenträger 1 sicher in einer Zentrifuge gehalten werden kann. Sowohl Fluidiksystem als auch Aufnahme sind für die Erfindung unerheblich, so dass deren genaue Ausführung nicht gezeigt und auch nicht relevant ist. Zentrifugierbare Probenträger sind im Stand der Technik jedoch hinreichend bekannt, wobei die erfindungsgemäße Lehre mit jedem Probenträger direkt und ohne weiteres kombinierbar ist.

Der Probenträger 1 ist in der Fig. 1 in Gebrauchsstellung abgebildet. Das bedeutet, dass er in der gezeigten Ausrichtung in einer Zentrifuge sitzt. In dieser Ausrichtung weist die Gewichtskraft Fg nach unten.

Das Flüssigkeitsreservoir 2 ist in der gezeigten Ausführung als Blister ausgebildet, das nachträglich in eine entsprechende Aufnahme 3 in dem Probenträger 1 einsetzbar ist. Das eingesetzte Flüssigkeitsreservoir 2 ist so ausgerichtet, dass eine Öffnung 4 des Flüssigkeitsreservoirs 1 oben angeordnet ist.

Die Öffnung 4 des Flüssigkeitsreservoirs 1 ist mit einer Siegelfolie 7 verschlossen. Das Flüssigkeitsreservoir 1 im Beispiel weist eine Kegelstumpf-artige Form auf, wobei die Öffnung 4 den größeren Durchmesser besitzt. Die schrägen Wände 5 des Kegelstumpfes verlaufen demnach von unten schräg nach oben. Innerhalb des Flüssigkeitsreservoirs 1 ist eine Flüssigkeit 6 dargestellt. Das Flüssigkeitsreservoir 2 ist im Beispiel etwa halb so hoch wie der Probenkörper 1, wobei die Siegelfolie 7 befindet sich in etwa in der vertikalen Mitte des Probenträgers. Selbstverständlich kann das Flüssigkeitsreservoir 1 auch andere Abmessungen aufweisen.

Oberhalb des Flüssigkeitsreservoirs 1 besitzt der Probenträger 1 einen deformierbaren Bereich 8. Dieser deformierbare Bereich ist beispielsweise als Membran 9 einstückig mit dem Probenkörper 1 ausgebildet. An der Unterseite der Membran 9 sind zwei oder mehrere Aktivierungselemente 10 angeordnet. Die Aktivierungselemente 10 sind somit zwischen der Membran 9 und der Siegelfolie 7 des Flüssigkeitsreservoirs 1 angeordnet. Die Aktivierungselemente 10 sind hier als Dreiecke mit einer Spitze 11 dargestellt. Sie können beispielsweise als Kegel mit rundem Querschnitt ausgebildet sein. Es sind jedoch andere Formen denkbar, wobei eine Spitze 11 vorteilhaft ist.

In Gebrauchsstellung berühren die Aktivierungselemente 10 die Siegelfolie 7 jedoch nicht, wobei der Abstand zwischen den Spitzen 11 der Aktivierungselemente 10 und der Siegelfolie 7 in Gebrauchsstellung gering sein kann, etwa weniger als 1 mm insbesondere weniger als 0,2 mm.

Zwischem der Siegelfolie 7 des Flüssigkeitsreservoirs 2 und der Membran ist eine Kammer 14 gebildet, die im Wesentlichen flüssigkeitsdicht ist. Die Kammer 14 ist über einen Kanal 15 mit einem nicht näher gezeigten Fluidiksystem des Probenträgers 1 verbunden.

Die Fig. 2 zeigt den Probenträger eingesetzt in eine Zentrifuge (nicht näher gezeigt), die einen Stempel 12 zur Aktivierung des Probenträgers 1 besitzt. Das Aktivieren des Probenträgers 1 umfasst das Öffnen des Flüssigkeitsreservoirs 2. Der Stempel ist oberhalb des deformierbaren Bereichs 8 ausgerichtet.

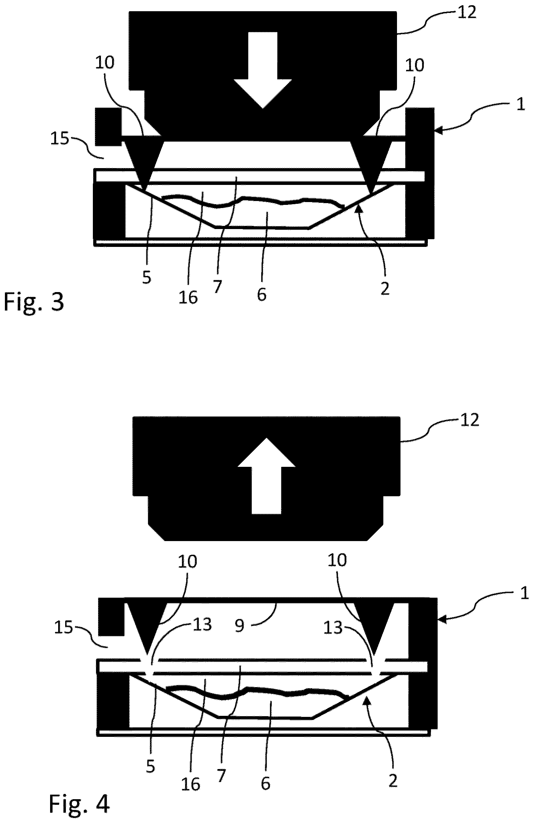

In der Fig. 3 ist der Stempel abgesenkt. Dadurch wird die Membran 9 des deformierbaren Bereichs 8 verformt und die Spitzen 11 der Aktivierungselemente 10 durchstechen die Siegelfolie 7.

Die Aktivierungselemente 10 sind dabei so an der Membran 9 angeordnet, dass sie am äußeren Umfang des Flüssigkeitsreservoir 2 liegen. Die Siegelfolie 7 wird daher am Umfang der Öffnung 4 des Flüssigkeitsreservoirs 2 durchstochen.

Die Membran 9 und der deformierbare Bereich 8 sind vorzugsweise elastisch verformbar, so dass die Membran 9 nach dem Anheben des Stempels 12, die Membran 9 wieder in ihre ursprüngliche Form zurückkehrt, wie in Fig. 4 dargestellt.

Es bleiben zwei Löcher 13 in der Siegelfolie 7.

Selbstverständlich kann die Membran 9 auch mehr als zwei Aktivierungselemente 10 besitzen, wodurch dann mehr als zwei Löcher 13 in der Siegelfolie 7 resultieren würden.

Der Vorteil an der Erfindung ist nun, dass die Löcher 13 in der Siegelfolie 7 oben liegen, also entgegen der Gewichtskraft Fg. Dadurch ist es unmöglich, dass die Flüssigkeit 6 selbstständig oder durch die Gewichtskraft Fg bedingt aus dem Flüssigkeitsreservoir 2 austritt.

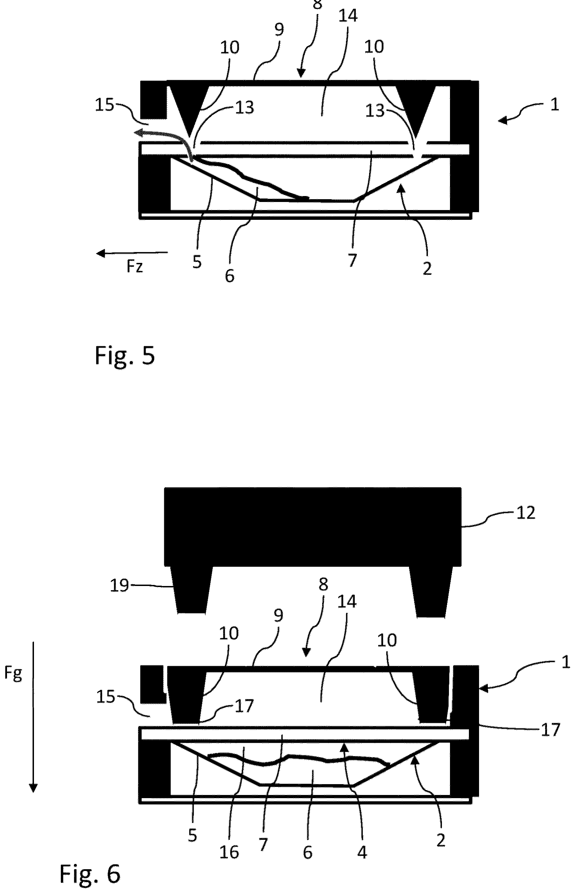

Eine Entnahme der Flüssigkeit 6 kann ausschließlich durch eine Zentrifugalkraft Fz erfolgen, die etwa beim Zentrifugieren des Probenträgers 1 auftreten. In Fig. 5 ist dieser Vorgang exemplarisch dargestellt. Während einer Zentrifugation des Probenträgers 1 wirkt eine Zentrifugalkraft Fz auf die Flüssigkeit 6. Die Flüssigkeit 6 wird durch die Kraft Fz gegen eine äußere Wand 5 des Flüssigkeitsreservoirs gedrückt. Da diese Wand 5 schräg nach außen und oben verläuft, wird die Flüssigkeit 6 entlang der Wand nach außen und oben gedrückt. Am oberen und äußeren Ende des Flüssigkeitsreservoirs 2 befindet sich aber ein Loch 13 durch das die Flüssigkeit 6 nun aus dem Flüssigkeitsreservoir 2 in die Kammer 14 strömen kann. Von dort gelangt die Flüssigkeit 6 durch den Kanal 15 in ein Fluidiksystem des Probenträgers. Durch das innere Loch 13 in der Siegelfolie 7 kann Luft in das Flüssigkeitsreservoir entsprechend der entnommenen Flüssigkeitsmenge nachströmen, so dass eine vollständige und einfache Entleerung des Flüssigkeitsreservoirs 2 erfolgen kann.

Die Richtung der Zentrifugalkraft Fz gibt auch die Zentrifugationsrichtung an. Vorteilhafterweise ist zumindest ein Aktivierungselement 10 am untersten Punkt der Zentrifugationsrichtung angeordnet. Dadurch ist gewährleistet, dass eine Öffnung der Siegelfolie zumindest an dem Punkt erfolgt, an den durch die Zentrifugalkraft Fz die Flüssigkeit gedrückt wird. So bilden sich keine Flüssigkeitsreste im Flüssigkeitsreservoir.

Die Fig. 6 zeigt schematisch eine Schnittdarstellung eines Ausschnitt eines zentrifugierbaren Probenträgers 1 gemäß einer alternativen Ausführung. Der Probenträger 1 entspricht im Wesentlichen dem Probenträger 1 der Fig. 1. Gleiche und/oder funktionsgleiche Merkmale sind daher mit denselben Bezugszeichen versehen und nicht noch einmal explizit erläutert.

Der Probenträger 1 der Fig. 6 unterscheidet sich von dem Probenträger 1 der Fig. 1 durch die Ausgestaltung der Aktivierungselemente 10. Die Aktivierungselemente 10 weisen statt der Spitze in dieser Ausführung eine längliche Schneide 17 auf, die in Zentrifugationsrichtung ausgerichtet ist. Die Schneide 17 ragt in dieser Ausführung über den äußeren Rand des Flüssigkeitsreservoirs 2 hinaus. Dadurch wird erreicht, dass die Öffnung 13 vollständig bis zum Rand des Flüssigkeitsreservoirs 2 reicht und keine Taschen gebildet werden, hinter denen sich Flüssigkeit 6 ansammeln kann. Die Schneide 17 verformt dabei die Wände 5 des Flüssigkeitsreservoirs 2, durchsticht diese aber nicht. Dadurch wird verhindert, dass Flüssigkeit nach unten, also in Gravitationsrichtung aus dem Flüssigkeitsreservoir austreten kann.

Die Aktivierungselemente 10 sind in dieser Ausführung jeweils am freien Ende 20 einer Biegezunge 18 angeordnet. Der Stempel 12 besitzt hier zwei Stempelvorsprünge 19, die jeweils gegenüber einem freien Ende 20 einer Biegezunge 18 angeordnet sind. Beim Absenken des Stempels 12 lenkt jeder Stempelvorsprung 19 eine Biegezunge 18 aus, so dass die Schneide 17 des jeweiligen Aktivierungselements 10 die Siegelfolie 7 durchsticht.

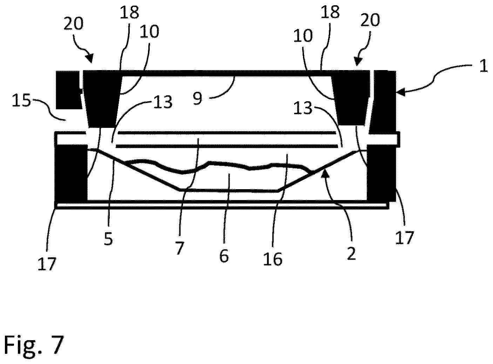

Die Fig. 7 zeigt den Probenkörper 1 nach dem Absenken und wieder Anheben des Stempels 12. Zu sehen ist hier deutlich, dass die Öffnungen 13 über den Rand des Flüssigkeitsreservoirs 2 hinausgeht, so dass eine vollständige Entleerung der Flüssigkeit 6 gewährleistet ist.

### Bezugszeichenliste

- 1: Probenträger
- 2: Flüssigkeitsreservoir
- 3: Aufnahme
- 4: Öffnung
- 5: Wände
- 6: Flüssigkeit
- 7: Siegelfolie
- 8: deformierbaren Bereich
- 9: Membran
- 10: Aktivierungselement
- 11: Spitze
- 12: Stempel
- 13: Loch
- 14: Kammer
- 15: Kanal
- 16: Luftraum
- 17: Schneide eines Aktivierungselements
- 18: Biegezunge
- 19: Stempelvorsprung
- 20: freies Ende einer Biegezunge

## Patentansprüche

1. Zentrifugierbarer Probenträger (1) mit einem Flüssigkeitsreservoir (2), das mit einer Siegelfolie (7) verschlossen ist, **dadurch gekennzeichnet,**
**dass** der Probenträger (1) wenigstens zwei Aktivierungselemente (10) aufweist,
**dass** die Aktivierungselemente (10) benachbart zur Siegelfolie (7) angeordnet sind, und
**dass** die Siegelfolie (7) durch eine Bewegung der Aktivierungselemente (10) durchstechbar ist.

2. Probenträger (1) nach Anspruch 1, **dadurch gekennzeichnet, dass** das Flüssigkeitsreservoir (2) so angeordnet ist, dass in Gebrauchsstellung des Probenträgers (1) eine mit der Siegelfolie (7) verschlossene Öffnung (4) des Flüssigkeitsreservoirs (2) nach oben, also entgegen der Richtung der Schwerkraft (Fg), ausgerichtet ist und/oder dass in Gebrauchsstellung des Probenträgers (1) unterhalb der Siegelfolie (7) ein Luftraum (16) gebildet ist.

3. Probenträger (1) nach einem der vorangehenden Ansprüche,
**dadurch gekennzeichnet, dass** das Flüssigkeitsreservoir (2) als Blister ausgebildet ist und/oder dass das Flüssigkeitsreservoir (2) eine runde Umfangskontur und/oder eine halbkugelartige Form und/oder eine Kegelstumpf-Form aufweist.

4. Probenträger (1) nach einem der vorangehenden Ansprüche,
**dadurch gekennzeichnet, dass** der Probenträger (1) wenigstens einen Fluidkanal (15) aufweist, der mit dem Flüssigkeitsreservoir (2) verbindbar ist.

5. Probenträger (1) nach einem der vorangehenden Ansprüche,
**dadurch gekennzeichnet, dass** ein Aktivierungselement (10) durch einen Stempel (12) druckbeaufschlagbar ist und/oder dass die Aktivierungselemente (10) elastisch ausgebildet sind und nach einer Druckbeaufschlagung in ihre ursprüngliche Form zurückkehren.

6. Probenträger (1) nach einem der vorangehenden Ansprüche,
**dadurch gekennzeichnet, dass** die wenigstens zwei Aktivierungselement (10) im Wesentlichen am äußeren Umfang des Flüssigkeitsreservoirs (2) angeordnet sind, so dass das Flüssigkeitsreservoir (2) an seinem äußeren Umfang durchstechbar ist, insbesondere wobei das Aktivierungselement nach außen über die Öffnung (4) des Flüssigkeitsreservoirs (2) hinausragt.

7. Probenträger (1) nach einem der vorangehenden Ansprüche,
**dadurch gekennzeichnet**, die wenigstens zwei Aktivierungselemente (10) am Umfang des Flüssigkeitsreservoirs (2), vorzugsweise regelmäßig, verteilt angeordnet sind und/oder dass sich wenigstens ein Aktivierungselement (10) am untersten Punkt der Zentrifugationsrichtung befindet.

8. Probenträger (1) nach einem der vorangehenden Ansprüche,
**dadurch gekennzeichnet, dass** eine Flüssigkeit (6) im Flüssigkeitsreservoir (2) durch Zentrifugalkraft (Fz) aus dem Flüssigkeitsreservoir (2) beförderbar ist.

9. Verfahren zum Entleeren eines Flüssigkeitsreservoirs eines zentrifugierbaren Probenträgers, wobei eine Siegelfolie des Flüssigkeitsreservoirs an wenigstens zwei voneinander beabstandeten Stellen geöffnet wird,
und wobei zum Entleeren der Flüssigkeit eine Zentrifugalkraft (Fg) auf die Flüssigkeit in dem Flüssigkeitsreservoir ausgeübt wird.

10. Verfahren nach Anspruch 9, wobei der Probenkörper ein Probenkörper nach einem der Ansprüche 1 bis 8 ist und/oder dass zumindest eine der Öffnungen am untersten Punkt der Zentrifugationsrichtung angebracht wird und/oder dass die Öffnungen jeweils durch ein an dem Probenkörper angeordnetes Aktivierungselement vorgenommen wird.
